Europäisches Patentamt

European Patent Office

Office européen des brevets

(11) Numéro de publication : **0 452 203 B1**

## (12) FASCICULE DE BREVET EUROPEEN

(45) Date de publication du fascicule du brevet :
**11.01.95 Bulletin 95/02**

(51) Int. Cl.⁶ : **G02B 13/14,** G02B 1/02

(21) Numéro de dépôt : **91400941.0**

(22) Date de dépôt : **08.04.91**

(54) **Dispositif de visualisation comportant un objectif bispectral à faible dispersion dans l'infrarouge.**

(30) Priorité : **10.04.90 FR 9004586**

(43) Date de publication de la demande :
**16.10.91 Bulletin 91/42**

(45) Mention de la délivrance du brevet :
**11.01.95 Bulletin 95/02**

(84) Etats contractants désignés :
**DE GB IT NL**

(56) Documents cités :
**EP-A- 0 124 682**
**EP-A- 0 171 903**
**EP-A- 0 309 075**
**PATENT ABSTRACTS OF JAPAN vol. 10, no.**
**324 (P-512)(2380) 5 Novembre 1986 & JP-A-61**
**132 901**

(73) Titulaire : **MATRA DEFENSE**
**4, rue de Presbourg**
**F-75116 Paris (FR)**

(72) Inventeur : **Coussot, Pierre**
**4, rue Berthe Morizot**
**F-78360 Montesson (FR)**

(74) Mandataire : **Fort, Jacques**
**CABINET PLASSERAUD**
**84, rue d'Amsterdam**
**F-75009 Paris (FR)**

EP 0 452 203 B1

## Description

L'invention concerne les objectifs destinés à fournir l'image infrarouge d'une scène dans un plan objet et elle trouve une application particulièrement importante dans les dispositifs de visualisation associant un tel objectif à des barrettes de capteurs placées dans le plan focal et à des moyens de balayage de la scène.

Il est souvent nécessaire de former l'image d'une scène émettant dans l'infrarouge pour plusieurs bandes spectrales et notamment pour les bandes allant de 3 à 5 μm et de 8 à 12 μm, c'est-à-dire pour des fenêtres de transparence atmosphérique.

Pour que l'image obtenue soit de bonne qualité, la dispersion de l'objectif dans chaque bande spectrale doit être faible. De plus, pour permettre l'exploitation de l'image dans le plan objet, le tirage de l'objectif doit être au moins approximativement le même pour les deux bandes spectrales.

La première idée qui vient à l'esprit pour atteindre ce résultat est l'utilisation de miroirs, qui ne présentent aucune aberration chromatique. Malheureusement on est conduit à utiliser des surfaces asphériques et des montages hors d'axe difficiles à centrer. De plus, les miroirs sont limités à un champ angulaire faible, souvent insuffisant.

Les systèmes dioptriques doivent être constitués de lentilles transparentes dans l'infrarouge. On connaît de nombreux matériaux remplissant cette condition. Malheureusement, beaucoup d'entre eux n'ont qu'une résistance mécanique insuffisante ou ne sont utilisables que sous forme de pièces de petit diamètre et/ou de faible épaisseur : c'est le cas par exemple des chalcogénure, du tellurure de cadnium et de l'AMTIR. Pratiquement les seuls matériaux qui permettent de constituer des systèmes embarqués sont le silicium (qui a cependant l'inconvénient d'être opaque vers 9 μm), le germanium, ZnS et ZnSe.

Mais, l'association de deux de ces matériaux, si elle permet de corriger le chromatisme d'un objectif dans une bande infrarouge limitée, ne permet pas de maintenir la dispersion à une valeur acceptable pour deux bandes infrarouge éloignées à la fois, comme les bandes 3-5 μm et 8-12 μm.

On sait qu'on corrige le chromatisme d'un objectif en associant des lentilles convergentes, peu dispersives dans la bande de fréquence où la correction doit être effectuée, avec des lentilles divergentes très dispersives et de faible puissance. La dispersion $\nu$ est définie comme :

$$\nu = (n\,\lambda_m - 1) / (n\,\lambda_{Max} - n\,\lambda_{min}) \quad (1)$$

où :

$n\,\lambda_m$ est l'indice pour la longueur d'onde moyenne dans la bande,

$n\,\lambda_{Max}$ est l'indice pour la longueur d'onde maximum de la bande,

$n\,\lambda_{min}$ est l'indice pour la longueur d'onde minimum de la bande.

Plus la valeur de $\nu$ est élevée, moins la matière est dispersive.

A titre d'exemple, les dispersions pour trois matériaux utilisables pour constituer des systèmes embarqués sont les suivantes :

- Ge : 860
- ZnSe : 58
- ZnS : 23.

On peut en conséquence constituer un objectif ayant une faible dispersion dans la bande allant de 8 à 12 μm en associant des lentilles convergentes en germanium à des lentilles divergentes en ZnS ou en ZnSe.

Malheureusement, une telle constitution interdit de corriger le chromatisme dans la bande de 3 à 5 μm, du fait que la dispersion $\nu$ des matériaux dans cette bande est très différente de celle qu'ils ont dans la bande de 8 à 12 μm : elle est en effet :

- 102 pour Ge
- 178 pour ZnSe
- 113 pour Zns.

La correction dans la plage de 8 à 12 μm se traduit, dans la bande de 3 à 5 μm, par un chromatisme qui est même supérieur à celui d'une lentille simple.

Il semble donc nécessaire d'utiliser deux objectifs différents corrigeant chacun le chromatisme dans une bande particulière.

On connaît par ailleurs (EP-A-0 171 903) un objectif athermique utilisable dans l'infrarouge, conforme au préambule de la revendication 1 et susceptible d'être incorporé dans un détecteur.

La présente invention vise à fournir un dispositif de visualisation (le terme "visualisation" devant être compris dans un sens large et comme signifiant toute représentation d'une scène par affichage sur un moniteur ou sous forme de signaux) fournissant deux images infrarouge de la même scène, correspondant à des bandes spectrales différentes, ayant un objectif dont les lentilles sont uniquement constituées de matériaux présentant des propriétés mécaniques suffisantes pour résister à des vibrations et plus généralement à constituer des systèmes embarqués, présentant une dispersion faible dans deux bandes de fréquences éloignées, notamment les bandes 3 à 5 μm et 8 à 12 μm.

L'invention propose dans ce but un dispositif conforme à la revendication 1. Souvent un rapport d'environ 1/2 entre la puissance totale des lentilles (ou de la lentille) en Ge et la puissance totale des lentilles (ou de la lentille) en ZnS sera proche de l'optimum.

On reconstitue ainsi, de façon artificielle, un jeu de lentilles divergentes équivalent à des lentilles toutes constituées en un même matériau fictif dont la dispersion est voisine de 35 dans la bande de 8 à 12 μm et de 105 dans la bande de 3 à 5 μm, c'est-à-dire présente une loi de variation qui se rapproche de celle du séléniure de zinc.

Si on se limite au cas d'un doublet de puissance $\underline{P}$, le choix des puissances à affecter aux lentilles en ZnS et en Ge peut être déterminé par le calcul. Si on désigne par $P_1$ et par $P_2$ la puissance totale des lentilles convergentes et divergentes, respectivement et si on désigne par $\nu_1$ et $\nu_2$ la dispersion du matériau constituant les lentilles convergentes et par $\nu_2$ la dispersion du matériau fictif qui vient d'être défini, on doit respecter les relations suivantes pour les deux bandes de fréquence :

$$P_1 = (\nu_1 / \nu_1 - \nu_2)\,P$$
$$P_2 = (-\nu_2 / \nu_1 - \nu_2)\,P \quad (2)$$

Les objectifs classiques destinés à travailler dans la bande de 8 à 12 μm comportent généralement des lentilles convergentes en germanium, du fait de la faible dispersion de ce matériau. Mais sa variation d'indice en fonction de la température est extrêmement élevée, de l'ordre de 100 fois celle des verres habituels d'optique. Du fait que les objectifs selon l'invention n'utilisent le germanium que pour constituer des lentilles de puissance faible, les conséquences de cette variation sont écartées : ZnSe et ZnS ont en effet des coefficients de variation d'indice 10 fois inférieurs à ceux du germanium. pratiquement on peut ainsi réaliser des objectifs athermiques, autorisant l'emploi sans stabilisation thermique dans un environnement qui peut être celui prévu pour les matériels militaires, allant de -30°C à + 70°C.

La constitution de cet objectif est contraire aux idées habituelles, puisque c'est ZnSe qui est utilisé pour constituer les lentilles convergentes, alors que habituellement on utilise le germanium.

On voit que l'invention permet non seulement de constituer un objectif ayant peu de dispersion et sensiblement le même tirage pour les deux bandes de longueur d'onde, mais aussi présentant, moyennant un choix particulier dans les plages de valeurs mentionnées ci-dessus, un tirage qui ne change pratiquement pas en fonction de la température, évitant ainsi la nécessité d'un asservissement de la position du plan focal ou d'une stabilisation de température qui l'un et l'autre exigent des dispositifs encombrants, complexes et coûteux.

L'invention sera mieux comprise à la lecture de la description qui suit de modes particuliers de réalisation, donnés à titre d'exemples non limitatifs. La description se réfère aux dessins qui l'accompagnent dans lesquels :

- la figure 1 montre schématiquement un dispositif de visualisation suivant un mode particulier de réalisation de l'invention ;
- les figures 2 et 3 montre deux constitutions possibles d'objectif utilisable dans le dispositif de la figure 1.

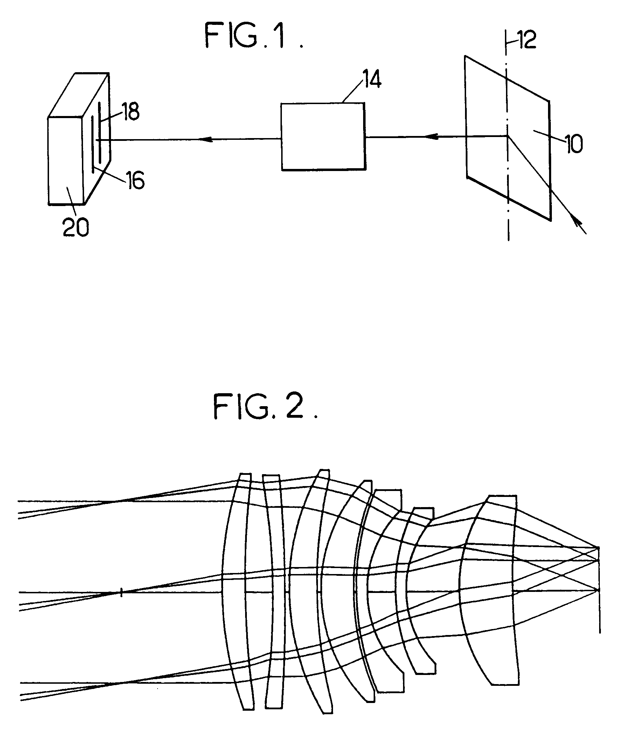

Le dispositif montré schématiquement en figure 1 comporte un miroir de balayage 10, rotatif autour d'un axe 12, dont le faisceau de sortie traverse l'objectif 14. Dans le plan focal de cet objectif sont placées deux barrettes de capteurs infrarouge 16 et 18, choisies chacune pour avoir une sensibilité optimale dans l'un des deux domaines. Etant donné que les détecteurs destinés à la bande 8-12 μm doivent être très refroidis, l'ensemble des deux détecteurs est placé dans un refroidisseur 20 qui peut être un vase Dewar. Si les tirages correspondant aux deux bandes de fréquence sont légèrement différentes, les détecteurs peuvent être légèrement décalés l'un de l'autre dans le sens de propagation de la lumière ou une lame correctrice en germanium peut être placée devant l'un des deux. Toutefois il est possible de tolérer des écarts de tirage, à condition qu'il restent compatibles avec la dimension de la tache de bifraction. Par exemple, pour un tirage de 100 mm, on peut tolérer une variation de 50 μm environ pour une ouverture numérique d'environ f/2.

On donnera maintenant, à titre d'exemple de mise en oeuvre de l'invention, deux constitutions possibles d'objectif bispectral.

La figure 2 montre un premier objectif comportant sept lentilles, ayant une focale de 60 mm et un tirage de 21 mm, donnant des résultats satisfaisants dans la bande spectrale allant de 3 μm à 10,5 μm. Les rayons de courbure des dioptres successifs, dans le sens de propagation de la lumière et la nature des lentilles sont donnés dans le tableau ci-joint.

## TABLEAU I

| LENTILLE | RAYON DE COURBURE (mm) | MATERIAU |
|---|---|---|
| 1 | 89 | |
| 1 | 216 | ZnSe |
| 2 | -173 | |
| 2 | -368 | Germanium |
| 3 | 61 | |
| 3 | 118 | ZnSe |
| 4 | 39 | |
| 4 | 64 | ZnSe |
| 5 | 64 | |
| 5 | 28 | ZnS |
| 6 | 45 | |
| 6 | 26 | ZnS |
| 7 | 39 | |
| 7 | 166 | ZnSe |

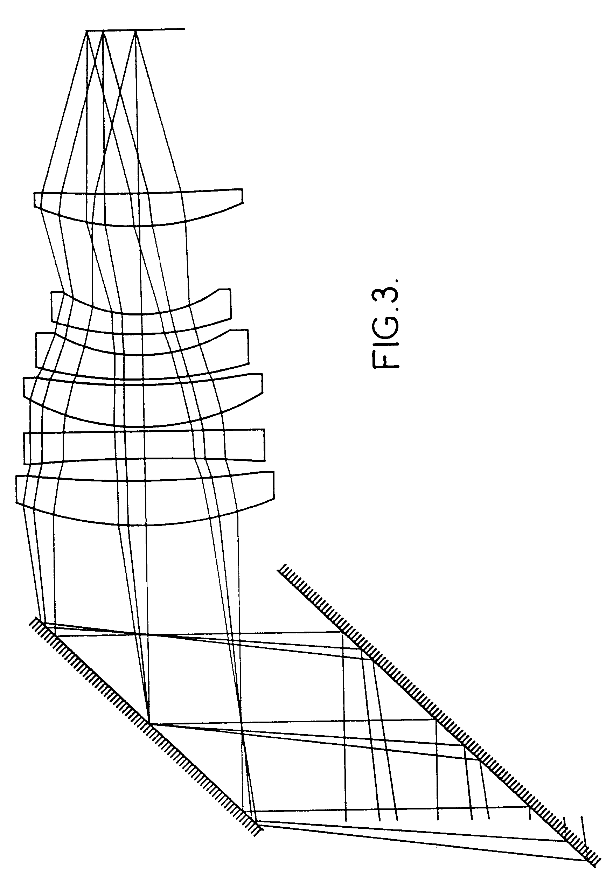

L'objectif représenté sur la figure 3 est destiné à travailler dans la même bande spectrale que le premier, mais a une focale et un tirage plus élevés.

Les caractéristiques de ce second objectif, qui, tel qu'illustré sur la figure 3, est associé à des miroirs de renvoi, dont le plus proche de l'objectif est placé au niveau de la pupille d'entrée, sont données dans le tableau II ci-dessous.

## TABLEAU II

| LENTILLE | RAYON DE COURBURE (mm) | MATERIAU |
|---|---|---|
| 1 | 81 | |
| 1 | 230 | ZnSe |
| 2 | −275 | |
| 2 | ∞ | Germanium |
| 3 | 56 | |
| 3 | 148 | ZnSe |
| 4 | 97 | |
| 4 | 42 | ZnS |
| 5 | 66 | |
| 5 | 33 | ZnS |
| 6 | 61 | |
| 6 | 416 | ZnSe |

On voit que, dans les deux exemples ci-dessus, les lentilles convergentes sont en ZnSe : ce sont par exemple les première, troisième, quatrième et septième lentilles dans le cas de la figure 1. Les lentilles divergentes sont en germanium (ménisques divergents à convexité tournée vers l'aval dans le cas de la figure 2) ou en ZnS (ménisques divergents à convexité tournée vers l'amont dans le cas de la figure 2).

## Revendications

1. Dispositif de visualisation dans l'infrarouge, comprenant un détecteur (20) et un objectif (14) ayant un jeu de lentilles convergentes en ZnSe et un jeu de lentilles divergentes dont chacune est soit en ZnS, soit en Ge,

la puissance totale de la lentille ou de l'ensemble des lentilles en Ge étant comprise entre 1/3 et 2/3 de la puissance totale de la lentille ou de l'ensemble des lentilles en ZnS, de façon à obtenir une faible dispersion dans l'infrarouge, caracterisé

en ce que le détecteur comprend deux barrettes (16, 18) de capteurs placées dans le plan focal, parallèles l'une à l'autre et décalées dans le sens d'un balayage d'une scène par des moyens optiques (10), de façon à obtenir deux images infrarouge de la même scène correspondant à des bandes spectrales différentes.

2. Dispositif selon la revendication 1, caractérisé en ce que la puissance de la lentille unique ou de l'ensemble des lentilles en germanium est d'environ la moitié de la puissance de la lentille unique ou de l'ensemble des lentilles en ZnS.

## Patentansprüche

1. Sichtinstrument im Infrarotbereich umfassend einen Detektor (20) und ein Objektiv (14) und einen Satz von Konvergenzlinsen aus ZnSe und einen Satz von Divergenzlinsen, von denen jede aus ZnS oder Ge ist, wobei die Gesamtstärke der Linse oder der Gesamtheit der Linsen aus Ge zwischen 1/3 und 2/3 der

EP 0 452 203 B1

Gesamtstärke der Linse oder der Gesamtheit der Linsen aus ZnS ist, um eine schwache Dispersion im Infrarotbereich zu erreichen, **dadurch gekennzeichnet, daß** der Detektor zwei Sensorstäbe (16,18) in der Fokalebene aufweist, die parallel zueinander sind und in Richtung der Abtastung einer Szene durch eine optische Einrichtung (10) in der Weise verschoben sind, daß zwei Infrarot-Bilder derselben Szene entsprechend zweier verschiedener Spektralbanden erhalten werden.

2. Vorrichtung nach Anspruch 1, **dadurch gekennzeichnet, daß** die Stärke der einzigen Linse oder der Gesamtheit der Linsen aus Germanium ungefähr die Hälfte der Stärke der einzigen Linse oder der Gesamtheit der Linsen aus ZnS ist.

## Claims

1. A device for visualisation in the infra-red, comprising a detector (20) and an objective (14) having a set of convergent lenses of ZnSe and a set of divergent lenses, each of which is of either ZnS or of Ge, the total power of the lens or assembly of lenses of Ge being between 1/3 and 2/3 of the total power of the lens of assembly of lenses of ZnS, so as to obtain a low dispersion in the infra-red, characterised in that the detector comprises two strips (16, 18) of sensors which are disposed in the focal plane and are parallel with one another and offset in the direction of a scanning of a scene by optical means (10), so as to obtain two infra-red images of the same scene corresponding to different bands of the spectrum.

2. A device according to Claim 1, characterised in that the power of the single lens or the assembly of lenses of germanium is approximately one half the power of the single lens or the assembly of lenses of Zns.

6

# FIG.1.

# FIG.2.

FIG.3.